# EUROPÄISCHE PATENTSCHRIFT

(11) **EP 1 825 734 B1**
(45) Veröffentlichungstag und Bekanntmachung des Hinweises auf die Patenterteilung: **11.06.2014**
(21) Anmeldenummer: 06126471.9
(22) Anmeldetag: 19.12.2006
(51) Int. Cl.: A01B 63/112, A01B 67/00

(54) **Verfahren und Vorrichtung zur Regelung der Zugkraft eines Arbeitsfahrzeuges**
Method and device for adjusting the tractive force of a working vehicle
Méthode et dispositif de réglage de la force de traction d'un véhicule de travail

(30) Priorität: 28.02.2006 DE 102006009571
(43) Veröffentlichungstag der Anmeldung: 29.08.2007
(73) Patentinhaber: CLAAS Selbstfahrende Erntemaschinen GmbH, 33428 Harsewinkel (DE)
(72) Erfinder: Kleinemenke, Heinrich, 33428, Harsewinkel (DE); Stelzer, Andreas, 04509, Schönwölken (DE)

(56) Entgegenhaltungen:
- EP-A- 1 068 780
- EP-A- 1 175 818
- DE-B- 1 205 328
- GB-A- 957 544
- GB-A- 2 361 673
- US-A- 3 275 084
- US-A- 4 848 481

## Beschreibung

Die Erfindung bezieht sich auf eine Vorrichtung zur Regelung der Zugkraft eines Arbeitsfahrzeuges mit einem angehängten Bodenbearbeitungsgerät, nach dem Oberbegriff des Patentanspruchs 1.

Verschiedenartige landwirtschaftliche Geräte zur Bodenbearbeitung, wie beilspielsweise Grubber, Pflüge und Eggen werden vorwiegend über eine Dreipunktanbauvorrichtung mit einem Traktor oder einem anderen Zugfahrzeug gekoppelt. Solche vielseitig anwendbaren Anbauvorrichtungen sind bereits in verschiedenen Ausführungen bekannt. Sie ermöglichen es, Arbeitsgeräte auf eine Verhältnismäßig einfache Weise mit einem Zugfahrzeug zu verbinden. Dabei werden die Kopplungspunkte am Zugfahrzeug mit den entsprechenden Aufnahmen des Arbeitsgerätes in Verbindung gebracht, so dass das Zugfahrzeug und das jeweilige Arbeitsgerät eine funktionsfähige Einheit bilden Durch die Betätigung von hydraulischen Hubzylindern wird das Arbeitsgerät angehoben und in seiner Höhenlage innerhalb bestimmter Grenzen zwischen der Transportstellung der erforderlichen Arbeitsposition eingestellt Durch spezielle Ausgestaltungen der Kopplungsstelle wird die Funktionalität erweitert und dadurch das mögliche Einsatzspektrum der Arbeitsgeräte durch größere Freiheitsgrade und Hubbereiche erhöht (DE 199 32 612 A1). Trotz verschiedener Vorteile besteht bei diesen Anhängeausführungen der Nachteil der ungleichen Lastverteilung auf die Vorderund Hinterachse des Zugfahrzeuges, da die hintere Kopplung schwerer Anhängegeräte mit einem großen Fahrwiderstand zu einer erheblichen Entlastung der Vorderachse führt Damit auch bei schwierigen Bodenverhältnissen eine sichere Übertragung der Zugkraft auf alle Antriebsräder erfolgen kann, ist deshalb im Bereich der Vorderachse die Anbringung von Zusatzgewichten notwendig, um eine ausgewogene Zugkraftverteilung auf alle Räder eines allradgetriebenen Zugfahrzeuges zu erreichen. Die Anordnung dieser Zusatzgewichte erfordert jedoch neben den Kosten für deren Herstellung Anbau aufgrund des größeren Fahrzeuggewichtes auch einen höheren Kraftstoffbedarf fur den Fahrzeugantrieb. Auch die zur Bodenfuhrung des Arbeitsgerätes angeordneten Stützräder, die das gesamte Gewicht des Arbeitsgerätes sowie die vertikalen Kräfte der Arbeitswerkzeuge aufnehmen, erhöhen den zur Überwindung der hohen Rollreibungskräfte erforderlichen Zugkraftbedarf des Arbeitsfahrzeuges.

Der Erfindung liegt die Aufgabe zugrunde, durch eine vorteilhafte und kostengünstige Ausführung der Anhängevorrichtung zwischen einem Arbeitsfahrzeug und einem angehängten Bodenbearbeitungsgerät eine effektive Kraft- und Lastübertragung zu erreichen und damit eine optimierte Zugkraftregelung eines allradgetriebenen Arbeitsfahrzeuges zu ermöglichen.

Diese Aufgabe wird durch die in dem Patentanspruch 1 genannten kennzeichnenden Merkmale gelöst. Weitere vorteilhafte Ausführungen des Erfindungsgegenstandes ergeben sich aus den nachgeordneten Ansprüchen.

Die erfndungsgemäße Vorrichtung ermöglicht eine optimale Anpassung an die jeweiligen Einsatzbedingungen in Abhängigkeit von den Bodenverhältnissen und den landtechnischen Erfordernissen. Durch die vorteilhafte Steuerung der an den Bodenbearbeitungswerkzeugen wirkenden Kräfte sowie deren Überleitung auf die Antriebsräder wird die Zugkrafteffizienz des Arbeitsfahrzeuges erhöht.

Infolge der mittigen Einleitung der bei der Bodenbearbeitung auftretenden Kräfte in das Arbeitsfahrzeug wird die Vorder- und Hinterachse gleichermaßen belastet, so dass die Antriebsräder beider Achsen die volle Zugkraft übertragen konnen, ohne dass an der Vorderachse Zusatzgewichte angebracht werden müssen.

Die bei bekannten Bodenbearbeitungsgeräten vorhandenen vorderen Stützräder sind bei der erfindungsgemäßen Vorrichtung nicht erforderlich, so dass deren Fahrwiderstand entfällt. Da die während der Bodenbearbeitung auftretenden Kräfte auf die angetriebenen Räder des Arbeitsfahrzeuges übertragen werden, wirkt sich dies auf die jeweils erforderliche Größe der Zugkraft aus. Bei einem hohen Beafbeitungswiderstand wird demnach nicht der Zugwiderstand, sondern die notwendige Zugkraft erhöht,

Weiteren ermöglicht es die Regelungseinnchtung, das gesamte Gewicht des Bodenbearbeitungsgerätes oder/und Anteile des Gewichtes des Arbeitsfahrzeuges auf die Werkzeuge des Bodenbearbeitungsgerätes wirken zu lassen. Dies ist besonders dann von Vorteil, wenn die Werkzeuge, in hartes und trockenes Erdreich eindringen müssen, Zum anderen ist dadurch auch ein Leichtbau des gesamten Bodenbearbeitungsgerätes möglich, da ein hohes Eigengewicht oder besondere Zusatzgewichte für das ausreichend tiefe Eindringen der Werkzeuge in den Erdboden nicht erforderlich ist Somit kann auch der für die Herstellung erforderliche Materialaufwand wesentlich verringert werden,

Die mittige Kugelgelenkkupplung der Anhängevorrichtung am Arbeitsfahrzeug hat den Vorteil, dass dieser Kopplungsbereich ein deutlich geringeres Schwingungsverhalten aufweist als eine Anhängung im Heckbereich des ArtJ.eitsfahrzeuges. Besonders auf einem unebenen Ackerboden wird dadurch die Laufruhe des angehängten Bodenbearbeitungsgerätes und damit die Qualität der Bodenbearbeitung erhÖht. Weiterhin wird eine außerordentlich große Wendigkeit, ein einfacher und problemloser Anbaugerätewechsel sowie die Möglichkeit eines spurversetzten Fahrens erreicht.

Indem der Hydraulikzyilnder eine veränderbare Stellkraft aufweist, kann die Gewichtskraft des Grubbers in wählbaren Anteilen teilweise auf dem Boden und teilweise auf das Arbeitsfahrzeug übertragen werden.

Dadurch, dass die Stellkraft des laydraulikzylinders verringert wird, damit die Arbeitswerkzeuge des Bodenbearbeitungsgerätes durch das Eigengewicht des Bodenbearbeitungsgerätes in den Boden eingezogen werden, kann der Grubber leichter gebaut werden,

Wenn die Stellkraft des Hydraulikzylinders vergrößert wird, damit das Eigengewicht des Bodenbearbeitungsgerätes zumindest teilweise über die Anhängevorrichtung auf das Arbeitsgerät übertragen werden, wird die Zugkraft des Arbeitsfahrzeugs erhöht.

In vorteilhafter Ausgestaltung der Erfindung ist dem Bodenbearbeitungsgerät in seinem hinteren Bereich ein höhenverstellbares Stützrad zugeordnet, wobei mit dem Stützrad die Arbeitstiefe der Werkzeuge zusätzlich einstellbar ist, so dass der Ragrahmen des Bodenbearbeitungsgerätes parallel zur Bodenebene verläuft, damit alle hintereinander angeordneten Werkzeuge gleichtief in den Boden eindringen.

Die Erfindung wird nachstehend an einem Ausführungsbeispiel naher erläutert. In der zugehörigen Zeichnung zeigen:

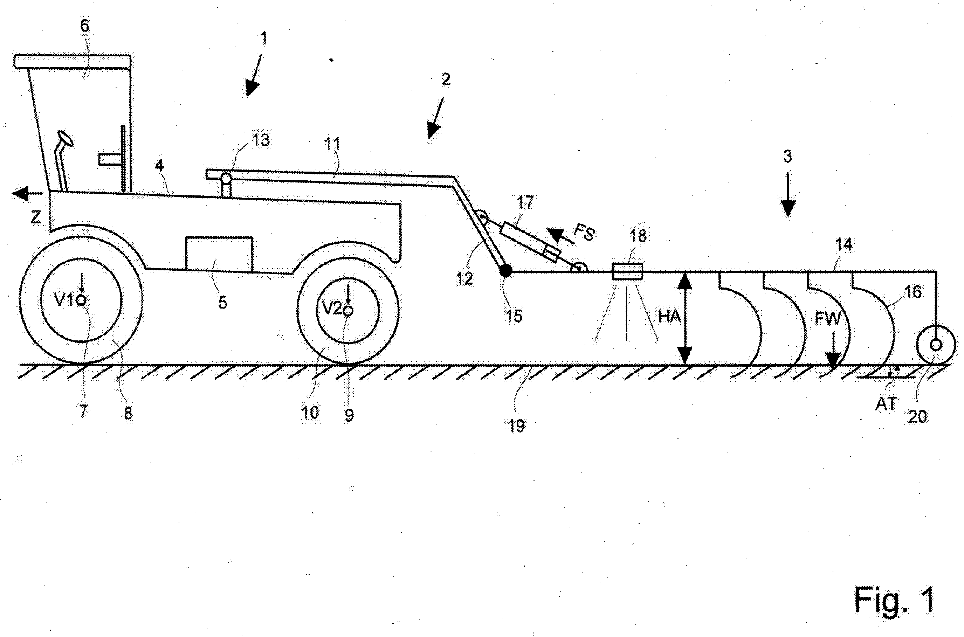

- Figur 1: eine schematische Darstellung der Seitenansicht eines Arbeitsfahrzeuges mit einem angehängten und als Grubber ausgeführten Bodenbearbeitungsgerät,
- Figur 2: die Vorderansicht eines Grubbers mit großer Arbeitsbreite, der aus mehreren nebeneinander angeordneten und schwenkbar miteinander verbundenen Sektionen besteht.

An einem allradgetriebenen Arbeitsfahrzeug 1 ist über eine Anhängevorrichtung 2 ein als Grubber ausgeführtes Bodenbearbeitungsgerät 3 angehängt. Das Arbeitsfahrzeug 1 umfasst im Wesentlichen einen Fahrzeugrahmen 4, einen Antriebsmotor 5, eine Fahrerkabine 6 sowie eine Vorderachse 7 mit den Vorderrädern 8 und eine Hinterachse 9 mit den Hinterrädern 10. Die Anhängevorrichtung 2 besteht in ihrer Längsausdehnung aus einem winkelförmigen Rahmen, wobei sich ein Rahmenteil 11 oberhalb des Fahrzeugrahmens 4 erstreckt und das andere Rahmenteil 12 abwärts zum Bodenbearbeitungsgerät 3 gerichtet ist. Am Arbeitsfahrzeug 1 ist die Anhängevorrichtung 2 an einer etwa mittig zwischen den Vorder- und Hinterrädern 8, 10 an der Oberseite des Fahrzeugsrahmens 4 angeordneten Kugelgelenkkupplung 13 lösbar befestigt. Das abwärts gerichtete Rahmenteil 12 der Anhängevorrichtung 2 ist mit dem Tragrahmen 14 des Bodenbearbeitungsgerätes 3 über ein Gelenk 15 schwenkbar verbunden Am Tragrahmen 14 sind unter anderem die einzelnen Werkzeuge 16 des Bodenbearbeitungsgerätes 3 befestigt. Zwischen dem abwärts gerichteten Rahmenteil 12 und dem vorderen Bereich des Tragrahmens 14 ist obertralb des Gelenkes 15 ein Hydraulikzylinder 17 gelenkig angeordnet. Durch eine entsprechende Beaufschlagung des Hydraulikzylinders 17 werden die jeweils auf die Vorder- und Hinterräder 8,10 des Arbeitsfahrzeuges 12 oder auf die Werkzeuge 16 des Bodenbearbeitungsgerätes 3 wirkenden Kräfte geregelt.
Entsprechend der veränderbaren Stellkraft F_{S} des Hydraulikzylinders 17 werden die auf die Werkzeuge 16 wirkenden vertikalen Kräfte F_{W} sowie die auf die Vorder- und Hinterräder 8,10 einwirkenden Vertikalkräfte V₁, V₂ gesteuert und uber die Anhängevorrichtung 2 übertragen. Die Stellkraft Fs des Hydraulikzylinders 17 wird verringert, damit die Arbeitswerkzeuge 16 des Bodenbearbeitungsgerätes 3 durch das Eigengewicht des Bodenbearbeitungsgerätes 3 in den Boden eingezogen werden. Die Stellkraft F_{S} des Hydraulikzylinders wird erhöht, damit das Eigengewicht des Bodebearbeitungsgerätes 3 zumindest teilweise über die Anhängevorrichtung 2 auf das Arbeitsfahrzeug 1 übertragen werden.
Die erforderliche Zugkraft Z des Arbeitsfahrzeuges 1 ist dabei abhängig von den jeweils auf die angetriebenen Vorder- und Hinterräder 8, 10 wirkenden Vertikalkräfte V₁, V₂, wobei mit steigenden Vertikalkräften V₁, V₂ die Zugkraft Z des Arbeitsfahrzeuges 1 zunimmt. Im vorderen Bereich des Tragrahmens 14 des Bodenbearbeitungsgerätes 3 ist ein Sensor 18 angeordnet, der den Höhenabstand H_{A} des Tragrahmens 14 zum Feldboden 19 erfasst. Der Sensor 18 ist vorzugsweise als Radarsensor ausgeführt In Abhängigkeit vom Abstandssignal des Sensors 18 wird der Hydraulikzylinder 17 entsprechend beaufschlagt und damit die Arbeitstiefe A_{T} der Werkzeuge 16 geregelt und auf dem Jeweils erforderlichen Wert gehalten. Am hinteren Ende des Tragrahmens 14 sind höheneinstellbare Stützräder 20 angeordnet, die in Abhängigkeit von dem vom Sensor 18 erfassten Höhenabstand H_{A} eine zusätzliche Einstellung der Arbeitstiefe A_{T} ermöglichen.

### Bezugszeichenliste

- 1: Arbeitsfahrzeug
- 2: Anhängevorrichtung
- 3: Bodenbearbeitungsgerät
- 4: Fahrzeugrahmen
- 5: Antriebsmotor
- 6: Fahrerkabine
- 7: Vorderachse
- 8: Vorderräder
- 9: Hinterachse
- 10: Hinterräder
- 11: Rahmenteil
- 12: Rahmenteil
- 13: Kugelgelenkkupplung
- 14: Tragrahmen
- 15: Gelenk
- 16: Werkzeug
- 17: Hydraulikzylinder
- 18: Sensor
- 19: Feldboden
- 20: Stützräder
- 21: Gelenk
- 22: Gelenk
- 23: Einzelrahmen
- 24: Einzelrahmen
- 25: Einzelrahmen
- 26: Halterung
- 27: Halterung
- 28: Hydraulikzylinder
- 29: Hydraulikzylinder

- F_{S}: Stellkraft
- F_{W}: Werkzeugkräfte
- V₁, V₂: Vertikalkräfte
- Z: Zugkraft
- H_{A}: Höhenabstand
- A_{T}: Arbeitstiefe

## Patentansprüche

1. Vorrichtung zur Regelung der Zugkraft (Z) eines allradgetriebenen Arbeitsfahrzeuges (1) mit einem angehängten Bodenbearbeitungsgerät (3), insbesondere eines Grubbers, wobei das Arbeitsfahrzeug (1) und das Bodenbearbeitungsgerät (3) durch eine Anhängevorrichtung (2) miteinander verbunden sind und die Arbeitstiefe (A_{T}) der Werkzeuge des Bodenbearbeitungsgerätes (3) im Feldboden einstellbar ist,
**dadurch gekennzeichnet,**
**dass** die Anhängevorrichtung (2) an einer etwa mittig zwischen den Vorder- und Hinterrädern (8,10) an der Oberseite des Fahrzeugrahmens (4) des Arbeitsfahrzeuges (1) angeordneten Kugelgelerikkupplung (13) und über ein Gelenk (15) am Tragrahmen (14) des Bodenbearbeitungsgerätes (3) befestigt ist, wobei im vorderen Bereich des Tragrahmens (14) ein Sensor (18) angeordnet ist, der eine Abstandserfassung zwischen dem Tragrahmen (14) und dem Feldboden (19) ermöglicht, und wobei im Bereich oberhalb des Gelenkes (15) ein zwischen einem abwärts gerichteten Rahmenteil (12) der Anhängevorrichtung (2) und dem Tragrahmen (14) des Bodenbearbeitungsgerätes (3) wirkender einstellbarer Hydraulikzylinder (17) gelenkig angeordnet ist, der in Abhängigkeit vom Abstandssignal des Sensors (18) beaufschlagbar ist.

2. Vorrichtung nach Anspruch 1,
**dadurch gekennzeichnet,**
**dass** die Anhängevorrichtung (2) in ihrer Längsausdehnung aus einem winkelförmigen Rahmen besteht, wobei sich ein Rahmenteil (11) oberhalb des Fahrzeugrahmens (4) erstreckt und das andere Rahmenteil (12) abwärts zum Bodenbearbeitungsgerät (3) gerichtet ist

3. Vorrichtung nach Anspruch 1 oder 2,
**dadurch gekennzeichnet,**
**dass** mit dem Hydraulikzylinder (17) die Arbeitstiefe (A_{T}) der Werkzeuge (16) des Bodenbearbeitungsgerätes (3) einstellbar ist

4. Vorrichtung nach einem der Ansprüche 1 bis 3,
**dadurch gekennzeichnet,**
**dass** der Hydraulikzylinder (17) eine veränderbare Stellkraft (F_{S}) aufweist.

5. Vorrichtung nach einem der Ansprüche 1 bis 4,
**dadurch gekennzeichnet,**
**dass** die Stellkraft (F_{S}) des Hydraulikzylinders (17) verringert wird, damit die Arbeitswerkzeuge (16) des Bodenbearbeitungsgerätes (3) durch das Eigengewicht des Bodenbearbeitungsgerätes (3) in den Boden eingezogen werden.

6. Vorrichtung nach einem der Ansprüche 1 bis 5,
**dadurch gekennzeichnet,**
**dass** die Stellkraft (F_{S}) des Hydraulikzylinders (17) vergrößert wird, damit das Eigengewicht des Bodenbearbeitungsgerätes (3) zumindest teilweise über die Anhängevorrichtung (2) auf das Arbeitsfahrzeug (1) übertragen werden.

7. Vorrichtung nach einem der Ansprüche 1 bis 6,
**dadurch gekennzeichnet,**
**dass** dem Bodenbearbeitungsgerät (3) im hinteren Bereich wenigstens ein höhenverstellbares Stützrad (20) zugeordnet ist, wobei mit dem Stützrad (20) die Arbeitstiefe (A_{T}) der Werkzeuge (16) zusätzlich einstellbar ist.

8. Vorrichtung nach einem der Ansprüche 1 bis 7,
**dadurch gekennzeichnet,**
**dass** das Bodenbearbeitungsgerät (3) aus mehreren gelenkig miteinander verbundenen Einzelrahmen (23, 24, 25) besteht, wobei zwischen den Einzelrahmen (23 24, 25) Hydraulikzylinder (28, 29) angelenkt sind

## Claims

1. Apparatus for regulating the pulling force (Z) of an all-wheel drive working vehicle (1) with a coupled ground working unit (3), in particular a cultivator, wherein the working vehicle (1) and the ground working unit (3) are connected together by a coupling device (2) and the working depth (A_{T}) of the tools of the ground working unit (3) in the field soil are adjustable,
**characterised in that**
the coupling device (2) is fixed at a ball joint coupling (13) arranged approximately centrally between the front and rear wheels (8, 10) at the top side of the vehicle chassis frame (4) of the working vehicle (1) and by way of a joint (15) at the carrier frame (14) of the ground working unit (3), wherein arranged in the front region of the carrier frame (14) is a sensor (18) which permits detection of a spacing between the carrier frame (14) and the field soil (19) and wherein arranged hingedly in the region above the joint (15) is an adjustable hydraulic cylinder (17) which is operative between a downwardly directed frame portion (12) of the coupling device (2) and the carrier frame (14) of the ground working unit (3) and which can be acted upon in dependence on the spacing signal from the sensor (18).

2. Apparatus according to claim 1 **characterised in that** in its longitudinal extent the coupling device (2) comprises an angled frame, wherein a frame portion (11) extends above the vehicle chassis frame (4) and the other frame portion (12) is directed downward to the ground working unit (3).

3. Apparatus according to claim 1 or claim 2 **characterised in that** the working depth (A_{T}) of the tools (16) of the ground working unit (3) is adjustable with the hydraulic cylinder (17).

4. Apparatus according to one of claims 1 to 3 **characterised in that** the hydraulic cylinder (17) has a variable adjusting force (F_{S}).

5. Apparatus according to one of claims 1 to 4 **characterised In that** the adjusting force (F_{S}) of the hydraulic cylinder (17) is reduced so that the working tools (16) of the ground working unit (3) are pulled into the ground by the inherent weight of the ground working unit (3).

6. Apparatus according to one of claims 1 to 5 **characterised in that** the adjusting force (F_{S}) of the hydraulic cylinder (17) is increased so that the inherent weight of the ground working unit (3) is at least partially transmitted by way of the coupling device (2) to the working vehicle (1).

7. Apparatus according to one of claims 1 to 6 **characterised in that** at least one height-adjustable support wheel (20) is associated with the ground working unit (3) in the rear region, wherein the working depth (A_{T}) of the tools (16) is additionally adjustable with the support wheel (20).

8. Apparatus according to one of claims 1 to 7 **characterised in that** the ground working unit (3) comprises a plurality of hingedly interconnected individual frames (23, 24, 25), wherein hydraulic cylinders (28, 29) are pivotably mounted between the individual frames (23, 24, 25).

## Revendications

1. Dispositif de régulation de la force de traction (Z) d'un véhicule de travail (1) à quatre roues motrices auquel est attelé un appareil de travail du sol (3), en particulier un cultivateur, le véhicule de travail (1) et l'appareil de travail du sol (3) étant reliés l'un à l'autre par un dispositif d'attelage (2) et la profondeur de travail (A_{T}) des outils de l'appareil de travail du sol (3) dans le sol du champ étant réglable, **caractérisé en ce que** le dispositif d'attelage (2) est fixé à un accouplement à rotule (13) disposé à peu près au milieu entre les roues avant et arrière (8, 10) du côté supérieur du châssis de véhicule (4) du véhicule de travail (1) et par l'intermédiaire d'une articulation (15) au châssis porteur (14) de l'appareil de travail du sol (3), un capteur (18) qui permet une détection de distance entre le châssis porteur (14) et le sol du champ (19) étant disposé dans la partie avant du châssis porteur (14), et un vérin hydraulique réglable (17), qui agit entre une partie de châssis (12) dirigée vers le bas du dispositif d'attelage (2) et le châssis porteur (14) de l'appareil de travail du sol (3) et qui peut être sollicité en fonction du signal de distance du capteur (18), étant disposé de manière articulée dans la zone située au-dessus de l'articulation (15).

2. Dispositif selon la revendication 1, **caractérisé en ce que** le dispositif d'attelage (2) est constitué, dans son extension longitudinale, d'un châssis angulaire, une partie de châssis (11) s'étendant au-dessus du châssis de véhicule (4) et l'autre partie de châssis (12) étant dirigée vers le bas en direction de l'appareil de travail du sol (3).

3. Dispositif selon la revendication 1 ou 2, **caractérisé en ce que** le vérin hydraulique (17) permet de régler la profondeur de travail (A_{T}) des outils (16) de l'appareil de travail du sol (3).

4. Dispositif selon l'une des revendications 1 à 3, **caractérisé en ce que** le vérin hydraulique (17) présente une force de réglage (F_{S}) variable.

5. Dispositif selon l'une des revendications 1 à 4, **caractérisé en ce que** la force de réglage (F_{S}) du vérin hydraulique (17) est diminuée pour que les outils de travail (16) de l'appareil de travail du sol (3) puissent rentrer dans le sol sous l'effet du poids de l'appareil de travail du sol (3).

6. Dispositif selon l'une des revendications 1 à 5, **caractérisé en ce que** la force de réglage (F_{S}) du vérin hydraulique (17) est augmentée pour que le poids propre de l'appareil de travail du sol (3) soit transmis au moins en partie au véhicule de travail (1) par l'intermédiaire du dispositif d'attelage (2).

7. Dispositif selon l'une des revendications 1 à 6, **caractérisé en ce qu'**au moins une roue d'appui (20) réglable en hauteur est associée à l'appareil de travail du sol (3) dans sa partie arrière, laquelle roue d'appui (20) permet un réglage supplémentaire de la profondeur de travail (A_{T}) des outils (16).

8. Dispositif selon l'une des revendications 1 à 7, **caractérisé en ce que** l'appareil de travail du sol (3) est composé de plusieurs châssis individuels (23, 24, 25) reliés les uns aux autres de manière articulée, des vérins hydrauliques (28, 29) étant articulés entre les châssis individuels (23, 24, 25).
